# EUROPEAN PATENT SPECIFICATION

(11) **EP 1 471 585 B1**
(45) Date of publication and mention of the grant of the patent: **13.11.2019**
(21) Application number: 03009232.4
(22) Date of filing: 23.04.2003
(51) Int. Cl.: H01G 9/20

(54) **Dye sensitized solar cells**
Organische farbstoffsensibilisierten Solarzellen
Cellules solaires sensibilisés par des colorants

(43) Date of publication of application: 27.10.2004
(73) Proprietor: Türkiye Sise Ve Cam Fabrikalari A.S., 80620 Istanbul (TR)
(72) Inventor: Siddik Icli, Bornova Izmir (TR); Ceylan, Zafer, Bornova Izmir (TR)
(74) Representative: Louis Pöhlau Lohrentz

(56) References cited:
- EP-A- 0 887 817
- EP-A- 1 209 708
- EP-A- 1 213 775
- US-A- 6 150 605
- US-A1- 2001 027 806
- YOA-CHUN SHEN ET AL: "FABRICATION, CHARACTERIZATION AND PHOTOVOLTAIC STUDY OF A TIO2 MICROPOROUS ELECTRODE" THIN SOLID FILMS, ELSEVIER-SEQUOIA S.A. LAUSANNE, CH, vol. 257, no. 1, 15 February 1995 (1995-02-15), pages 144-146, XP000496981 ISSN: 0040-6090
- DENG H ET AL: "Influence of molecular aggregation and orientation on the photoelectric properties of tetrasulfonated gallium phthalocyanine self-assembled on a microporous TiO2 electrode" PREPARATION AND CHARACTERIZATION, ELSEVIER SEQUOIA, NL, vol. 315, no. 1-2, 2 March 1998 (1998-03-02), pages 244-250, XP004147580 ISSN: 0040-6090

## Description

This invention relates to dye sensitized solar cells comprising a TiO₂ working electrode and a first and second dye.

Solar cells are assemblies that convert light to electrical energy. The principles of solar cells are based on photovoltaics. Solar cells constructed with selected semiconductor diodes which have convenient optical and electrical properties, are the primary tools of solar energy / electricity conversion. The efficiency of solar cells is the rate of solar radiation conversion to electrical energy in unit surface area.

Becquerel in 1839 has first discovered a photovoltaic system when he placed the electrodes in electrolyte liquid and observed the variation of voltage by incoming light intensity. G. W. Adams and R. E. Day had shown in 1876 a similar observation in solid state with selenium crystals. Following photodiodes are built on cupric oxide and selenium had found application in photography as light meters.

In 1914, the efficiency of photovoltaic diodes reached to 1-%, however it was only in 1954 that Chapin et al. used silicon crystals to build photovoltaic diodes which has 6-% efficiency. This invention is accepted as the turning point on photovoltaic power systems.

Conversion of light energy to electrical energy occurs in two steps; first the absorption of light by the semiconductor, and second the separation of electrical charges (electrons and electron holes) created by the absorption of light. These two steps operate simultaneously.

Semiconductors must be extremely pure in order to prevent the recombination of separated negatively charged electrons and positively charged electron holes. These handicaps of semiconductor solar cells result in difficulty in electricity utilization in industrial scales.

Commercial opaque silicon based solar cells are very stable and have long life times (10-50 years), but high costs of production is a serious problem. In recent years, a novel solar cell technology is based on plating conductive glass surfaces with a mixture of organic dyes - pigments and titanium dioxide. Next, conductive glass surfaces are embedded in a I₂/I⁻ electrolyte to produce electricity under visible light.

Organic Solar Cell (OSC) has the advantage of being transparent and is also capable of enhancing electricity power output by varying the molecular structure of the photo active dye. Prof. M. Graetzel in Switzerland, has initially developed an organic solar cell system that functions with a liquid electrolyte, which results in the destruction of solar cell in a short period following the evaporation of the electrolyte. An alternative to the use of liquid electrolytes in organic solar cell, is the use of conductive polymer electrolytes. However, this imposes loss of transparency and cost increases. An organic solar cell that is completely in solid state requires a non-liquid electron hopping conductive interface. For this aim Wudl and Heeger used conductive poly (phenylenevinylene) polymers, and Graetzel designed and applied new organic, organometalic molecular structures. Polymer solar cells are not transparent and lifetimes are short with respect to silicon based solar cells. New and advanced technical types of organic dye solar cells are expected to be more simple, low cost, transparent and to be able to produce electricity in satisfactory power ranges.

US 6,150,605 A is directed to a photovoltaic cell and manufacturing method thereof.

EP 0 887 817 A2 discloses a photoelectric material using organic photosensitising dyes and manufacturing method thereof.

US 2001/027806 A1 is directed to a dye-sensitized solar cell and method of manufacturing the same.

Yoa-chun Shen et al. (Thin solid films 257, 1995, pages 144 to 146) discloses fabrication, characterisation and photovoltaic study of a TiO2 microporous electrode.

EP 1 209 708 A1 is directed to hybrid solar cells with thermal deposited semiconductive oxide layer.

EP 1 213 775 A2 discloses a solid state dye sensitized solar cell.

Deng, H. et al. (Thin solid films 315, 1998, pages 244 to 250) discloses the influence of molecular aggregation and orientation on the photoelectric properties of tetrasulfonated gallium phthalocyanine self-assembled on a microporous TiO₂ electrode.

The present invention aims to produce an economical model of organic solar cell to function in solid phase and to be transparent.

In one aspect, the invention provides a transparent organic solar cell according to claim 1, which can be used as window glasses for self energy sufficient solar houses-buildings.

In another aspect, the invention relates to design and preparations of solar cells by the use of local organic-inorganic chemicals at drastically lower costs than the commercial silicon based semiconductor solar cells.

The invention can be used to produce photoelectrical conversion in three dimensions in transparent organic dye solar cells as opposed to two dimensional and high cost non-transparent semiconductor solar cells.

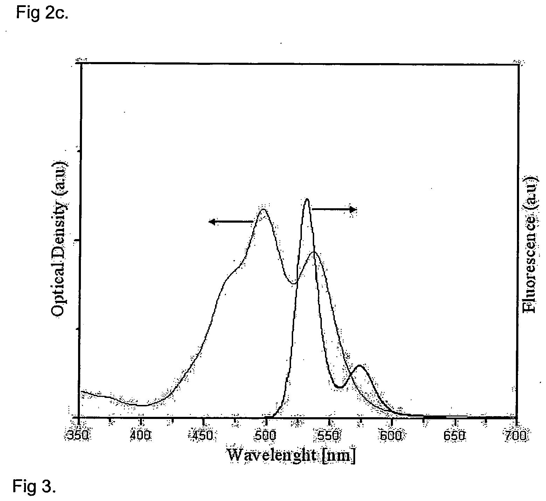

A specific embodiment of the present invention will now be described further, by way of example, with reference to the accompanying drawings, in which:

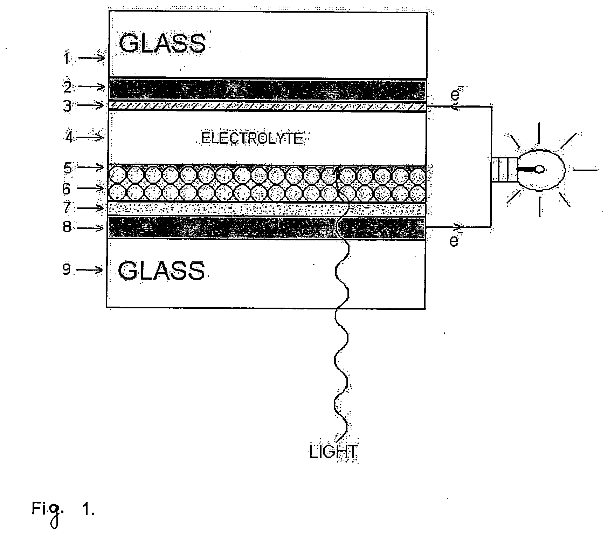

Figure 1 - Graetzel type, organic dye based solar cell structure.
Figure 2:
   a) SEM (Scanning Electron Microscop) pictures of porous TiO₂ film on conductive glass, screen printing coated layer of 8 µm thickness at 24.000x magnification.
   b) AFM (Atomic Force Microscopy) pictures of TiO₂ layer with 0.3 µm thickness on conductive glass plates prepared by dip-coating using, titania sol-gel solution at 250.000x magnification.
   c) AFM (Atomic Force Microscopy) pictures of TiO₂ layer with 6 µm thickness on conductive glass plates prepared by doctor-blade technique using TiO₂ paste synthesized by hydrothermal growth and sol-gel method
Figure 3: UV absorption of SnO₂/TiO₂/PER-4 sytem plated on glass surface and fluorescence emisson spectra. λ_{exc}=458 nm, of PER-4 in acetonitrile solution.
Figure 4:
   a) Functioning principles of an Organic Dye Solar Cell with one sensitizer organic dye, based on redox potential differences.
   b) Principles of an Organic Dye Solar Cell with two organic dyes (dye coctail), based on redox potential differences.

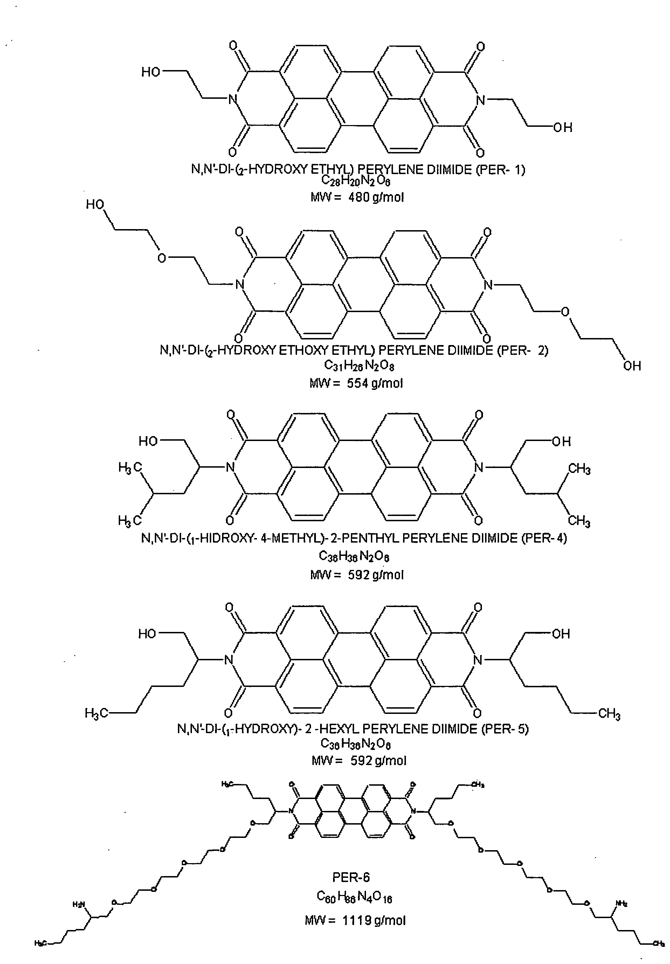

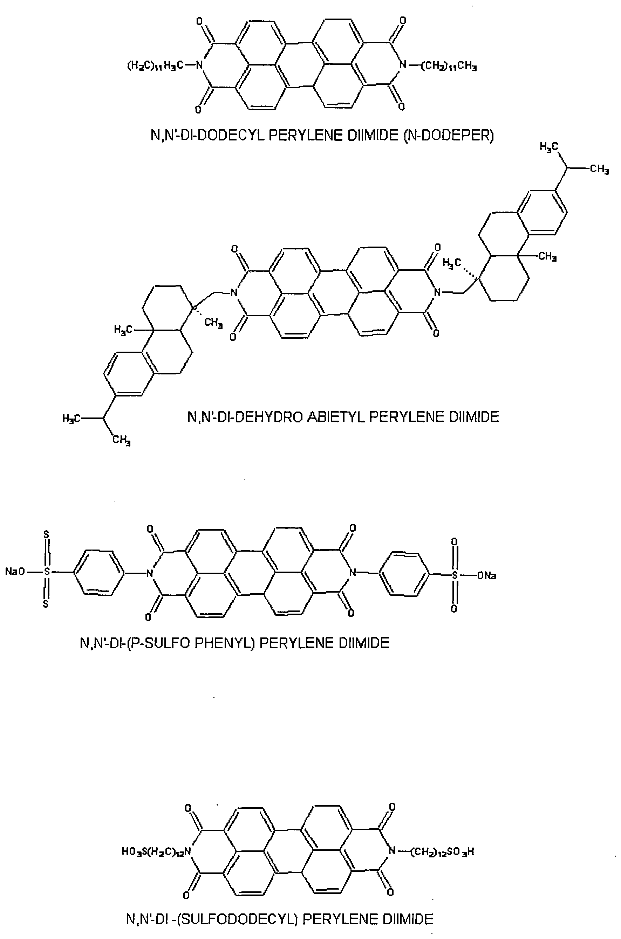

Figure 5: Open molecular structures of novel perylene diimides, that are experimented in produced Organic Dye Solar Cell systems Figure 6: I-V diagram of the SnO₂/TiO₂(8 µm)/TP + Per-4 / LiI+I₂ + PC / Pt / SnO₂ solar cell under 250 W halogen lamp,
Figure 7: I-V diagram of the SnO₂/TiO₂(8 µm)/ TP + Per-4/TP + Li₂PhC / LiI+I₂ +PC/Pt/SnO₂ solar cell under 250 W halogen lamp, V_{oc}=0.43 V, I_{sc}=2.94 mA/cm², FF=0.46, P=0.583 mW/cm².
Figure 8: I-V diagram of SnO₂ / TiO₂(0,3 µm)/ TiO₂(8 µm) / Per-4 / LiI+I₂ (MPN) / Pt / SnO₂ under 80 mW/cm² AM1,5 irradiation (MPN= 1-methoxy-propionitrile)
Figure 9: I-V diagram of SnO₂ / TiO₂(0,3 µm) / TiO₂(8 µm) / Per-4/ILQI+8.7% I₂ (MPN) / Pt / SnO₂ under 80 mW/cm² AM1,5 irradiation (ILQI=-1-butyl-3-methyl-imidazolium iodite)

Alternative photo-electron transfer mechanisms are required, in order to take over the known liquid phase electrolyte systems. Since organic dye solar cell is constructed on photo-electron transfer mechanisms, free electron released by the dye must have a new root of hopping through electron holes, in order to be able to replace the liquid electrolyte. New mechanism must be functional and based on a thin film technique and should be transparent between glass surfaces. In order to reach these goals, the most critical factor is to be able to produce the organic dye at our local capacities and be able to alter the molecular structure to reach a maximized photo induced electrical power.

The present invention, relates to alternative solar cells. Organic dye solar cell is a solar battery which is based on thin film technology employing organic dyes. Absorption of light and the movement of charges is realised in a different environment in OSC systems. Capability of mass production of organic dye solar cells by simple methods is hoped to bring lower costs for the utilization of solar energy on electricity production.

The solar cell subject to this invention is constructed by the coating of conductive glass surfaces with an electrolyte to produce an electrode and then a sandwich type placement of two electrodes on top of each other. First electrode is coated by colloidal TiO₂ whereas the counter electrode is coated by Pt, Au or Ag.

The most important factors in organic dye solar cells is the thickness of TiO₂ film, the porosity and particle sizes. The mobility of the charges are controlled by the optimal particle size and the interaction between the particles. Porosity size affects the proper diffusion of the dye and the electrolyte. Dye coating is best done when the TiO₂ film is sufficiently thick, has the largest surface area and when the TiO₂ particles have the lowest size. The coating of colloidal TiO₂ is realized either by screen printing method or dip coating method.

Screen printing method allows us to produce numerous coatings in equal qualities. Coating is porous and has a large surface area.

Dip coating method is performed by dipping the glass surface in a sol-gel /-organic dye solution by the use of a speed controlled equipment. Thickness of dip coated film depends on the withdrawal speed of glass and to the viscosity of the solution which increases on waiting. A withdrawal speed of 1 inch/min results in 10 nm thicknesses of sol-gel films. Glass is dried first at room temperature and then at 90-100-°C. Dip coating can be repeated after this drying process until the desired film thickness is attained.

After the electrode is coated either by screen printing or dip coating method, it is heated to 450°C at a rate of 10 °C/min. Then the electrode is waited for one hour in order to improve photocurrent ability. Because, when thermally processed at 450°C, TiO₂ is converted into anatase nano - crystalline (particle size 20-30 nm) square crystal bipyramide structure which gives the best photocurrent ability. Finally glass surface is cooled down at the same rate. The coating layer on the first electrode has a thickness of 5-10 µm and includes colloidal TiO₂ particles of 20-30 nm size.

In the next step, dye is applied on the glass surface which is coated with TiO₂ film. Dye is preferably perylene diimide. Eight N-substituted derivatives (abietyl, dodecyl, carboxyphenyl, dodecane sulfonic acid, benzene sulphonic acid, 2-hydroxyethyl, 1-ethylene glycole, (1-hydroxy-4-methyl)-2-pentyl) of perylene diimides were synthesized in laboratories and experimented in solar cells. Best results were observed with the N-(1-hydroxyl-4-methy))-2-pentyl perylene diimide molecular structure which dissolved most in sol-gel solution. Dye absorption process can be performed by two methods:
In the first method, dye is dissolved in an appropriate solvent at 1mM concentration. Then coated glass is placed in said solution for 12 hours. Following, coated glass is washed with the same solvent and dried in a low humidity atmosphere.

In the second method, dye is directly dissolved in a sol-gel solution. Then TiO₂ coated glass is dip coated in this solution at a pull out rate of 5-10 inch/min (1 inch = 25.4 mm) and dried in oven at 90-100°C for 10 minutes. Process repeated until the desired UV absorption of dye is reached. Finally the coated glass was heated in oven for 10 minutes at 150-°C.

At this stage, a secondary dye film is applied on TiO₂ surface, in order to enhance the current-voltage efficiency of the solar cell. This dye is of electron-donor type. Electron donor type dyes are selected from the group including carbazolo carbazole (CC), phthalocyanine (PhC) and copper (II) phthalocyanine (CuPhC).

Pt coated counter electrode is placed on the TiO₂ coated electrode. Then they were sealed with an adhesive to prevent air contact. Opposed parts of glasses have 1 cm width uncoated areas as cathode (-) and anode (+).

The final process is the injection of electrolyte in the space between two electrodes by capilary effect from two small holes. Five different types of electrolytes are used in OSC: These are Lil + I₂ electrolyte, ionic liquid electrolyte, ionic liquid/lithium dialyilamide electrolyte, KI + I₂ electrolyte, and KI + I₂ electrolyte in silica sol-gel. Only KI + I₂ electrolyte in silica sol-gel is spin-coated or dip-coated on the dye coated TiO₂ layer then counter electrode is placed and finalized solar cell sealed with adhesive.

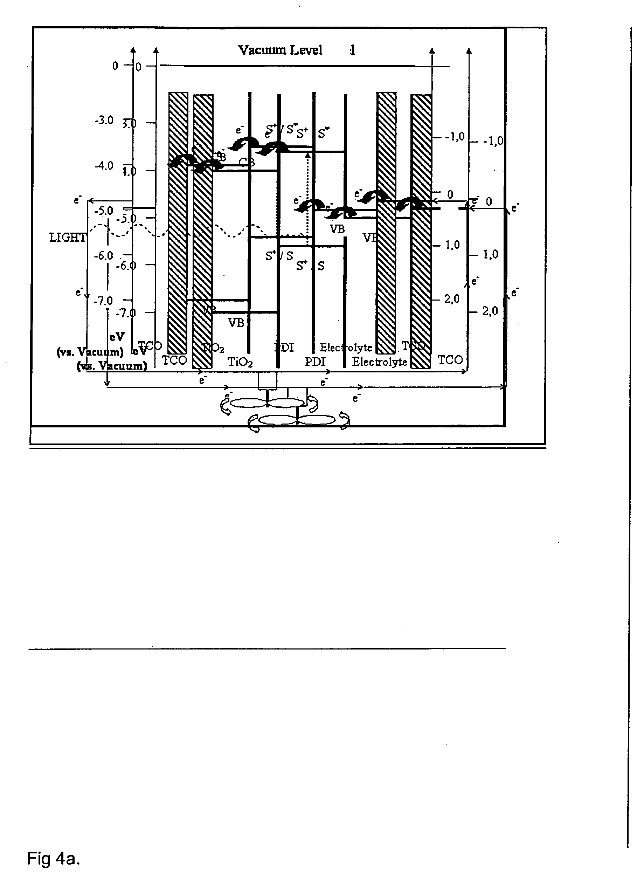

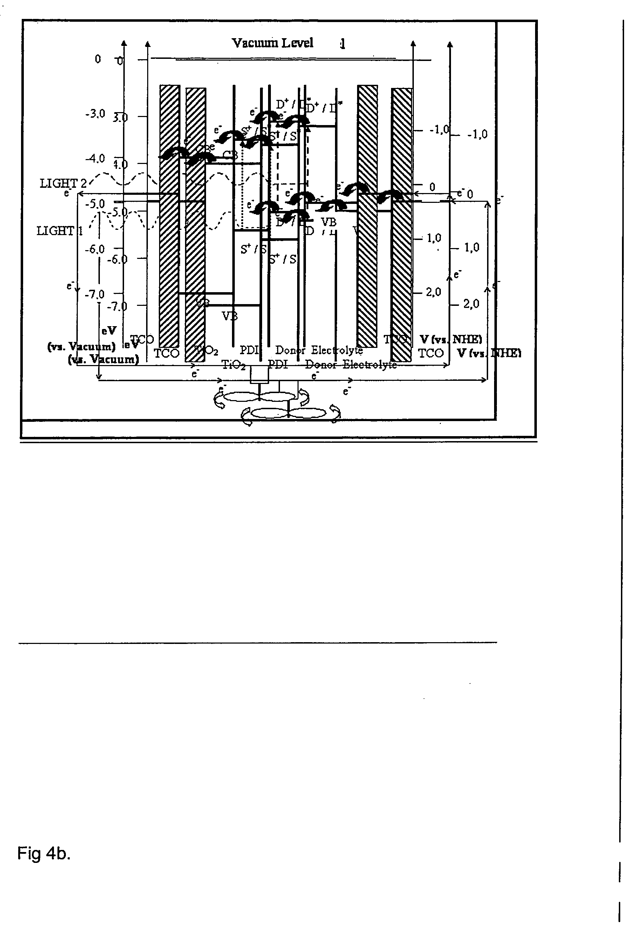

The dye in its excited state, transfers electrons to TiO₂. This process is called injection. Electrolyte receives the positive charged hole (S⁺) from the organic dye and gets oxidized. Electrolyte is reduced after the transfer of positive hole to Pt coated counter electrode. As seen in figure 4 oxidation redox potential of the electrolyte must be lower in positive values than the oxidation redox potential of organic dye *(valence band potential),* and the reduction redox potential of organic dye in negative values must be higher than the TiO₂ reduction redox potential *(conduction band potential).* Measured redox potentials of N-(1-hydroxy-4-methyl)-2-pentyl perylene diimide dye (S) is E_{red} = -3,7 eV, Eₒₓ = 6 eV (vs. vacuum level; 0V vs. NHE = 4.5 eV vs. Vacuum) and has band gap of 2.3 eV, which coincides with the redox potential range of dye S.

The present invention can be applied in the following fields:
- Utilization of transparent organic dye solar cells as window glasses for self energy sufficient solar houses-buildings.
- Design and preparations of solar cells by the use of local organic-inorganic chemicals at drastic lower costs than the commercial silicon based semiconductor solar cells.
- Production of photoelectrical conversion in three dimension in transparent organic dye solar cells.

### Example:

Pilkington's K type TCO glasses (F:SnO₂: Rₛₕₑₑₜ =17 ohm/square) are used in this study.

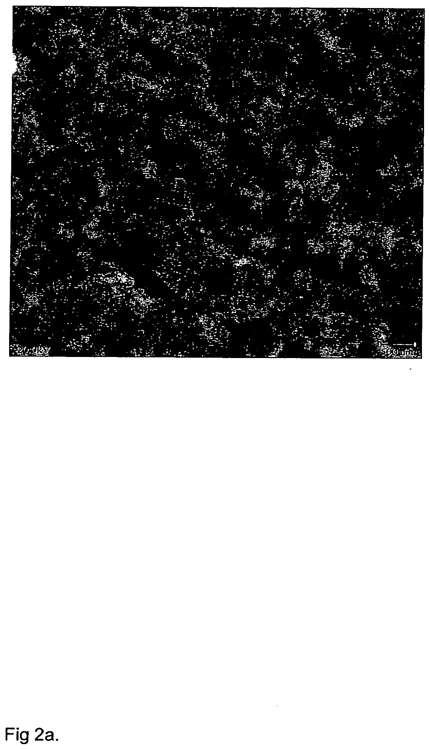

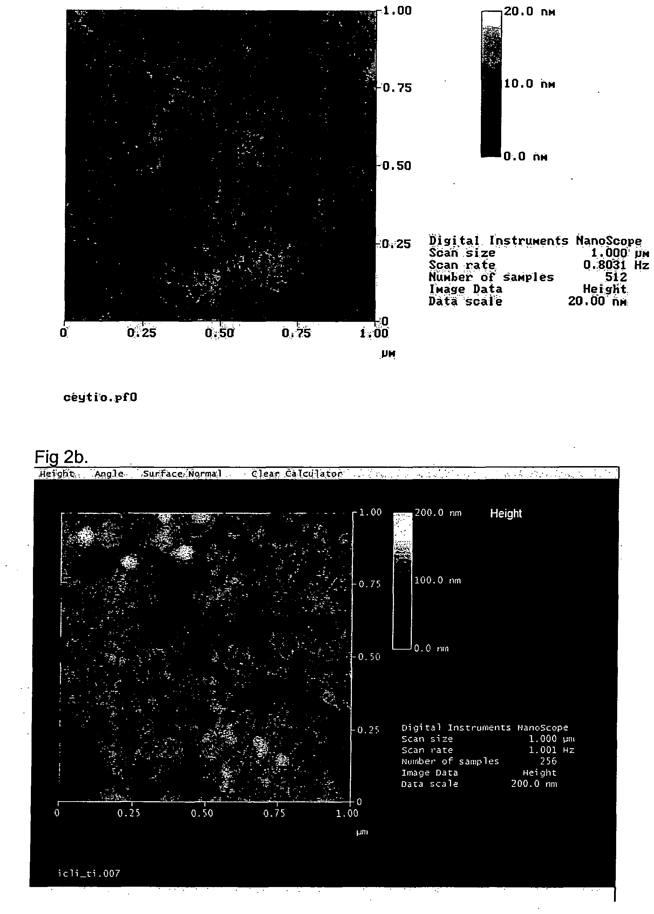

TiO₂ coatings on TCO glasses are done by two methods:
1) First method of coating TiO₂ on TCO (Transparent Conductive Oxide) glasses is dip coating method. In this method, sol - gel solution was prepared by the use of tetra-isopropyl-orthotitanate (10.7 g, Merck®), 2-propanol (88 g, Merck®), 37 % nitric acid (3 drops, Merck®) and de-ionized water (1.35 g). Sol-gel solution was ready for use after 30 minutes of stirring. Conductive TCO glasses were cut into units of 6-x-10 cm dimensions. On the sides of these units, strips of 1 cm width were covered with Scotch 3M® polymer band and whole unit was dip coated in sol-gel solution at a pull out speed of 12 inch/min. Coated glass was first dried in air for a few minutes then was heated in oven to 450°C at a temperature increase rate of 10°C/min for one hour and cooled down at the same rate. A thickness of 0.1 µm was measured for single coating, and coating was repeated three times till the TiO₂ layer reached a thickness of 0.3µm. Sol-gel dip-coated glasses have 90% transparency. TiO₂/-TCO glass was cut into units of 2x3 cm dimensions where 1 cm wide surface was uncoated for electrode connections in solar cell. Atomic Force Microscope picture of the coated glass has shown that a nanocrystalline TiO₂ layer is obtained at particle size with average of 10 nm (Figure 2b). Obtained this TiO₂ layer is non-porous and dense. Due to non-porous structure it is used as blocking layer to prevent short circuit of two electrodes via electrically conducting electrolyte.
2) Second method is by screen-printing of TiO₂: A paste of TiO₂ was prepared. For preparation commercial photoactive anatase form P25-TiO₂ of Degussa with particle size 20-30 nm was used. In order to break the large particles of coagulated agglomers, 6 g of P25-TiO₂ was treated with 0.2 ml acetyl-acetone and was drop wise added 14 ml polyethylene glycol-400 (PEG-400). The mixture was stirred for 30 minutes for homogeneity. This TiO₂ PEG-400 paste was coated by screen printing method on the conductive glass surface. Coated glass surface was heated in oven to 450°C at a temperature increase rate of 10°C/min, was kept at this temperature for one hour and cooled down at the same rate. A homogeneous distribution of TiO₂ film with a thickness of 8-10 µm is obtained as seen in figure 2a. Coated glass surfaces were opaque and also semi-transaparent. Coated glass was cut into units of 2-x-3 cm dimensions. Only 2-x-2 cm surface area of these units are coated and the remaining uncoated conductive glass surface is used for electrode connections.

A dye UV-Vis absorption of A-<1.0 was obtained. Figure 3 shows the UV absorption of perylene diimide dye in 8 µm TiO₂ sol-gel film and the fluorescence emission spectrum at λ_{exc}=458 nm, of per-4 in acetonitrile solution.

Absorption process of dye in TiO₂ film in two ways:
*1)* Absorption of dye on TiO₂ film: Dye was dissolved in a solvent with 1 mM concentration and TiO₂ coated glass at ∼8 µm thickness was placed in the solution for 12 hours. Following, coated glass was washed with the same solvent and dried in a nitrogen atmosphere. UV absorption of the dye on coated glass was measured to be in the absorption intensity range of 0.5-1, preferred absorption at 0.8 (SnO₂/TiO₂ (8µm)/PER).
2) Absorption of dye in sol-gel solution: Dye perylene diimide was directly dissolved in sol - gel solution. 5 mg of 1-hydroxyl -4-methyl-2-pentyl perylene diimide (PER) was dissolved in 30 ml TP sol-gel solution (TP-PER). TiO₂ coated glass was dip coated in this solution at a pull out rate of 6 inch/min and dried in oven at 90-100°C for 10 minutes. Process is repeated until the UV absorption of perylene diimide reached to 0.5-0.8. Finally the coated glass was heated in oven for 10 minutes at 150°C. As a result pink-red coloured, SnO₂/TiO₂/TP-PER (8 µm), coated glasses are obtained. Dip coating method had shown better results for voltage-current efficiencies in solar cells..

Application of a second thin dye film in solar cells: In order to enhance the current-voltage efficiency of the solar cell a second electron-donor type dye was coated on perylene diimide layer. Electron donor type dyes were selected as: carbazolo-carbazole (CC), phthalocyanine (PhC), cupper (II) phthalocyanine (CuPhC). Second dye thin film was applied by dip coating method as explained above, (SnO₂/TiO₂/ TPPER/TP-PhC), (SnO₂/TiO₂/TP-PER/TP-CC) and(SnO₂/TiO₂/ TP-PER/TP-CuPhC).

Preparation of electrolyte: Five different types of electrolytes are used in OSC:
*i) LiI* + *I₂ Electrolyte:* 0.4 M Lil and 0.04M I₂ solutions were prepared in propylene carbonate (PC, Merck®) and polyethylene glycol-200, 400, 600 (PEG-200, 400, 600). The prepared solutions must be kept under nitrogen atmosphere or in a desiccator in order to protect from the moisture of the air.
*ii) Ionic liquid electrolyte:* Ionic liquids, such as 1-methyl-4-alkyl imidazolium iodide, are known to be the organic salts and do not boil. Alkyl groups are selected to be as methyl, ethyl, propyl and butyl. Ionic liquid was mixed with iodine (I₂) to form a redox couple. Redox couples were prepared; by direct dissolving of 10 mmol iodine in ionic liquid, or by dissolving of iodine and ionic liquid in propylene carbonate and/or polyethylene glycol-200, 400, 600, 1000 at 1-99% ratios. Best current - voltage efficiencies were observed at 5-10% mixture ratios.
*iii) Ionic liquid*/*lithium dialkylamide electrolyte:*Lithium dialkylamide and ionic liquid was dissolved in PEG-400, best results were obtained at 0.2 M 1-methyl-3-butyl imidazolium iodide + 0.2 M lithium di-isopropylamide electrolyte system.
*iv) KI* + *I₂ electrolyte:* 0.4 M KI and 0.04 M I₂ solution was prepared in polyethylene glycol - 200, 400, 600 (PEG-200, 400, 600 Merck®) and propylene carbonate (PC). Prepared solutions must be kept under nitrogen atmosphere or in a desiccator in order to protect from the moisture of the air.
*v) KI* + *I₂ electrolyte in sol-gel:* This electrolyte is introduced as a solid electrolyte system for organic dye solar cells-OSC:
   a) TEOS (tetra-ethoxy-orthosilicate, Merck)/water in ½ ratio was hydrolysed at pH=3 by addition of HCl,
   b) 0.3 M KI in water and 0.03 M I₂ PEG-200 was mixed in equal ratios to obtain a transparent solution,
   c) 5 g of KI + I₂ redox couple solution was added into 1 ml of TEOS solution,
   d) SnO₂ / TiO₂ / TP-PER glass was dip coated or spin coated with this new sol-gel electrolyte solution, and dried in oven at 100°C.

Coating of counter electrode with Pt: TCO glasses (R=17 ohm.cm⁻¹) at 2x3 cm dimensions were coated with 20 - 40 nm Pt and 40 - 100 nm Au by arc - PVD (Physical Vapour Deposition) technique.

Completion of organic dye solar cell system:Pt or gold coated counter electrode was placed on the electrode of F:SnO₂ / TiO₂/ TP-PER / or SnO₂ / TiO₂ / TP-PER/ TP-CC(or PhC) in 2x2 cm dimensions. Then they were sealed with an adhesive to prevent air contact. By using two small holes, electrolyte is injected into the space between electrodes by capilary effect. Then, these two holes are sealed again with same adhesive. Only KI + I₂ containing silica sol-gel electrolyte spin-coated or spin coated on the of F:SnO₂/TiO₂/TP-PER / or SnO₂/-FiO₂/TP-PER/TP-CC instead of injection and finally counter electrode placed and sealed. Opposed parts of glasses have 1 cm width uncoated areas as cathode (-) and anode (+) in prepared organic dye solar cells-OSCs.

Measurement of photoelectric conversions:Below are the structures of the OSC and the measured open circuit voltage V_{oc}, and short circuit current I_{sc}, values under a Xe lamp of 765 W/m² radiation capacity.
1) SnO₂/TiO₂(8µm)/TP+Per-4/LiI+I₂ in PC/Pt/ SnO₂ V_{oc} = 340 mV I_{sc} = 2.3 mA,/cm²
2) SnO₂/TiO₂(0.3 µm)/Per-4+TiP/LiI+I₂ in PC/Pt/SnO₂ V_{oc} = 360 mV I_{sc} = 0.5 mA,/cm²
3) SnO₂/TiO₂(8 µm)/TP + Per-4/TP + PhC / LiI+I₂ in PC/Pt/SnO₂ V_{oc} = 310 mV I_{sc} = 1.3 mA,/cm²
4) SnO₂/TiO₂(8 µm)/Per-4/LiI+I₂ in PC/Au V_{oc} = 350 mV I_{sc} = 0.2 mA,/cm²
5) SnO₂/TiO₂(8 µm)/Per-6/ILQI+LiNPr₂/Au/SnO₂ V_{oc} = 350 mV I_{sc} = 0.2 mA,/cm²
6) SnO₂/TiO₂(8 µm)/Per-6+TP/ILQI+I₂/Au V_{oc} = 150 mV I_{sc} = 0.4 mA,/cm²
7) SnO₂/TiO₂(8 µm)/Per-6+TP/LiI+I₂ in PC/Au/SnO₂ V_{oc} = 350 mV I_{sc}=2.25 mA,/cm²

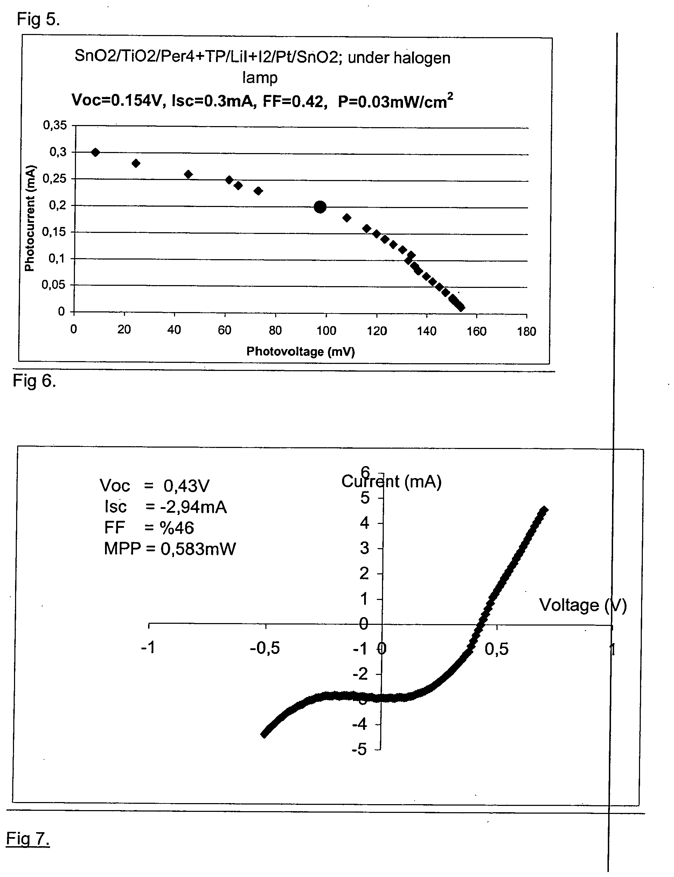

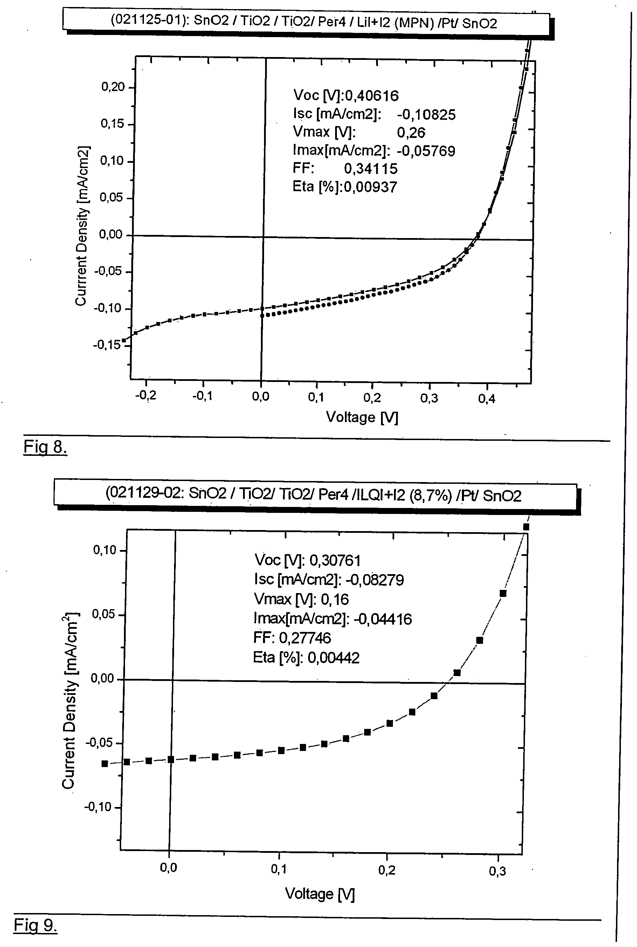

Figures 6, 7, 8 and 9 shows the I-V characteristics of four different OSCs under irradiation.

### Equipments employed for measurements and preparations:

- A solar simulator equipped with SUNTEST XLS+® 2200 W Xe lamp and IR filter, is used for photo electrochemical conversions in OSCs. Radiation intensity is measured to be 765 W/m² from the SUNTEST XLS® equipment.
- KHS solar simulator equipped with AM1.5 global filter and electronic power supply module.
- V_{oc} and I_{sc} measurements are done with a computer aided Agilent 34401® A Digital Multimeter.
- The measurements of I-V characteristics, maximum power points, MPP, and measurements of filling factors, FF were made under 250 W halogen lamp, using a Kiethley 236® and Kiethley 2400® Source Measurement Units employing Test Point® software.
- UV absorption the dye in thin film is measured using a PERKIN ELMER LAMDA 900® spectrophotometer.
- Characterization of nanocrystalline TiO₂ films are done with a Rigaku® X-Ray Diffractiometer.
- Thicknesses of coated film layers are measured with a Tankor Alpha Step 500® Profilometer.
- Arc vapor deposition of Pt or Au on conductive glasses is done by the use of a Anatec Hummer VII® DC Magnetron Sputter.
- Purity controls of the synthesized dyes are done by the use of PERKIN ELMER® Spectrophotometer, GX FT®-IR spectrophotometer and PTI QM1® spectrofluorometer.
- Atomic Force Spectroscopy pictures were taken at AFM-NANOSCOPE 3-A® Digital Instruments.
- Scanning Electron Microscopy pictures were taken at SEM-JEOL 733® Electron Micro Probe instrument.

## Claims

1. An organic dye solar cell comprising:
a) a first electrode made of glass having an electrically conductive surface (1) coated with a porous TiO₂-film (3),
b) a first pigment, which is absorbed on said TiO₂ film (3), wherein the first pigment is a perylene diimide derivative N-substituted with abietyl, dodecyl, carboxyphenyl, sulphoxydodecyl, sulphoxyphenyl, 2-hydroxyethyl, 1-ethylene glycol or (1-hydroxy-4-methyl)-2-pentyl,
c) a layer of a second pigment, which is absorbed on said TiO₂ film (3), wherein the second pigment is an electron-donor pigment selected from the group of carbazolo carbazole (CC), phthalocyanine (PhC), and copper (II) phthalocyanine (CuPhC),
d) an electrolyte, which is arranged on said layer of a second pigment, wherein the electrolyte is selected from the group consisting of LiI + I₂ electrolyte, ionic liquid electrolyte, ionic liquid/lithium dialkylamide electrolyte, KI + I₂ electrolyte, and KI + I₂ electrolyte in sol-gel, and
e) a counter electrode (2) made of glass having an electrically conductive surface coated with Pt, Au or Ag and arranged in opposite direction to the first electrode on said electrolyte.

2. The solar cell according to claim 1 wherein the first pigment is N,N'-di(2-hydroxyethyl) perylene diimide, N,N'-di(2-hydroxyethoxyethyl) perylene diimide, N,N'-di((1-hydroxy-4-methyl)-2-pentyl) perylene diimide, N,N'-di(1-hydroxy-2-hexyl) perylene diimide, N,N'-didodecyl perylene diimide, N,N'-didehydroabietyl perylene diimide, N,N'-di(p-sulphophenyl) perylene diimide or N,N'-di(sulphododecyl) perylene diimide.

## Patentansprüche

1. Organische Farbstoffsolarzelle umfassend:
a) eine erste Elektrode aus Glas mit einer elektrisch leitfähigen Oberfläche (1) beschichtet mit einem porösen TiO₂-Film (3),
b) ein erstes Pigment, welches auf dem TiO₂-Film (3) absorbiert ist, wobei das erste Pigment ein Perylendiimid-Derivat ist, das mit Abietyl, Dodecyl, Carboxyphenyl, Sulfoxydodecyl, Sulfoxyphenyl, 2-Hydroxyethyl, 1-Ethylenglycol oder (1-Hydroxy-4-methyl)-2-pentyl N-substituiert ist,
c) eine Schicht eines zweiten Pigments, welches auf dem TiO₂-Film (3) absorbiert ist, wobei das zweite Pigment ein Elektronendonor-Pigment ist, das aus der Gruppe von Carbazolocarbazol (CC), Phthalocyanin (PhC), und Kupfer(II)phthalocyanin (CuPhC) ausgewählt ist,
d) einen Elektrolyten, welcher auf der Schicht eines zweiten Pigments angeordnet ist, wobei der Elektrolyt aus der Gruppe, die aus LiI + I₂-Elektrolyt, ionischem Flüssigelektrolyt, ionischer Flüssigkeit/Lithiumdialkylamid-Elektrolyt, KI + I₂-Elektrolyt, und KI + I₂-Elektrolyt in Sol-Gel besteht, ausgewählt ist, und
e) eine Gegenelektrode (2) aus Glas mit einer elektrisch leitfähigen Oberfläche, die mit Pt, Au oder Ag beschichtet und in gegenüberliegender Richtung zur ersten Elektrode auf dem genannten Elektrolyten angeordnet ist.

2. Solarzelle nach Anspruch 1, wobei das erste Pigment N,N'-Di(2-hydroxyethyl)perylendiimid, N,N'-Di(2-hydroxyethoxyethyl)perylendiimid, N,N'-Di((1-hydroxy-4-methyl)-2-pentyl)perylendiimid, N,N'-Di(1-hydroxy-2-hexyl)perylendiimid, N,N'-Didodecylperylendiimid, N,N'-Didehydroabietylperylendiimid, N,N'-Di(p-sulfophenyl)perylendiimid oder N,N'-Di(sulfododecyl)perylendiimid ist.

## Revendications

1. Une cellule solaire à colorant organique comprenant :
a) une première électrode faite de verre ayant une surface électriquement conductrice (1) revêtue d'un film poreux en TiO₂ (3),
b) un premier pigment, qui est absorbé sur ledit film en TiO₂ (3), dans laquelle le premier pigment est un dérivé de pérylène diimide N-substitué par un abiétyle, un dodécyle, un carboxyphényle, un sulfoxydodécyle, un sulfoxyphényle, un 2-hydroxyéthyle, un 1-éthylène glycol ou un (1-hydroxy-4-méthyl)-2-pentyle,
c) une couche d'un second pigment, qui est absorbé sur ledit film en TiO₂ (3), dans laquelle le second pigment est un pigment donneur d'électrons choisi dans le groupe constitué du carbazolo carbazole (CC), de la phtalocyanine (PhC), et de la phtalocyanine de cuivre (II) (CuPhC),
d) un électrolyte, qui est agencé sur ladite couche d'un second pigment, dans laquelle l'électrolyte est choisi dans le groupe constitué d'un électrolyte de LiI + I₂, d'un électrolyte liquide ionique, d'un électrolyte liquide ionique/de dialkylamide de lithium, d'un électrolyte de KI + I₂ et d'un électrolyte de KI + I₂ en sol-gel, et
e) une contre-électrode (2) faite de verre ayant une surface électriquement conductrice revêtue de Pt, Au ou Ag et agencée dans une direction opposée à la première électrode sur ledit électrolyte.

2. La cellule solaire selon la revendication 1 dans laquelle le premier pigment est du N,N'-di(2-hydroxyéthyl) pérylène diimide, du N,N'-di(2-hydroxyéthoxyéthyl) pérylène diimide, du N,N'-di((1-hydroxy-4-méthyl)-2-pentyl) pérylène diimide, du N,N'-di(1-hydroxy-2-hexyl) pérylène diimide, du N,N'-didodécyl pérylène diimide, du N,N'-didéshydroabiétyl pérylène diimide, du N,N'-di(p-sulfophényl) pérylène diimide ou du N,N'-di(sulfododécyl) pérylène diimide.
